# EUROPEAN PATENT SPECIFICATION

(11) **EP 3 077 698 B1**
(45) Date of publication and mention of the grant of the patent: **20.03.2019**
(21) Application number: 14805283.0
(22) Date of filing: 28.11.2014
(51) Int. Cl.: F16F 7/10, F16F 7/108, B23Q 11/00

(54) **MOVABLE ELEMENT, DAMPING SYSTEM AND METHOD FOR IMPLEMENTING A MOVABLE ELEMENT**
BEWEGLICHES ELEMENT, DÄMPFUNGSSYSTEM UND VERFAHREN ZUR IMPLEMENTIERUNG EINES BEWEGLICHEN ELEMENTS
ÉLÉMENT MOBILE, SYSTÈME D'AMORTISSEMENT ET PROCÉDÉ PERMETTANT DE METTRE EN OEUVRE UN ÉLÉMENT MOBILE

(30) Priority: 05.12.2013 FR 1362154
(43) Date of publication of application: 12.10.2016
(73) Proprietor: SECO - E.P.B., 67330 Bouxwiller (FR)
(72) Inventor: FREYERMUTH, Alain, 67350 Pfaffenhoffen (FR); OSTERMANN, Mathieu, 67310 Allenwiller (FR); GROLL, Yannick, 67370 Reitwiller (FR); KRUMHORN, Pascal, 67350 Dauendorf (FR)
(74) Representative: Sandvik
(86) International application number: PCT/EP2014/076006
(87) International publication number: WO 2015/082361

(56) References cited:
- EP-A1- 2 108 473
- EP-A2- 0 089 311
- GB-A- 2 322 684
- JP-A- 2005 186 240
- US-A- 3 559 512
- US-A- 5 413 318

## Description

### BACKGROUND AND SUMMARY

The present invention relates to the field of damping devices for apparatus and tools and more particularly to the field of adaptable damping devices for cutting and drilling apparatus and tools.

The mounting of tools onto an adapted interface of a motor-driven device often requires the insertion of an intermediate part designed to limit the vibrations of the moving apparatus and tool. In the case of a tool that rotates, for example a cutting or drilling tool, vibrations can be caused by the resistance encountered by the cutting tool when in contact with the material of the cut piece. Said radial vibrations then interfere with the rotational movement of the cut part in relation to its axis of rotation. The intermediate damping device makes it possible to compensate for, even cancel out, the radial vibrations which may be produced by the tool in rotation.

Generally, said intermediate damping device is formed by a cylindrical part which forms a housing in which a centred cylindrical absorbent mass is located in the housing and held in position by elastic elements arranged on the periphery of the cylindrical mass in contact with the internal wall of the cylindrical housing. The function of this absorbent mass is to vibrate in a different phase to the cylindrical part of the housing and thus dampen the radial vibrations generated by cutting and in particular by the resistance encountered by the cutting tool. The damping device/cylindrical mass assembly is then arranged in alignment with the axis of rotation of the machine and the tool. The different elastic elements enable damping of the vibrational movements of the absorbent mass relative to the cylindrical part of the housing. Said damping can be controlled by modifying the elastic rigidity of the elastic suspension and/or the mass of the absorbent mass.

JP 2005 186240 discloses a damping mechanism having an absorbent mass with a profile for obtaining a variation in amplitude at each of its ends.

EP 0089311 relates to a damping mechanism comprising springs arranged at each side of an absorbent mass.

US 3559512 relates to a damping mechanism comprising a plurality of absorbent masses mounted in series along an axis.

US 5413318 discloses a damping mechanism including an absorbent mass mounted on an axis. The absorbent mass is able to vibrate with respect to the axis due to elastic elements positioned between the axis and the absorbent mass.

However, in existing devices to ensure that said absorbent mass is able to perform effective damping, it is necessary for the mass to vibrate in displacement at a frequency close to or identical to that of the tool to be damped while maintaining a phase shift relative to the vibrations of the tool to be damped. However, depending on the operation, the type of clamping, the type of spindle, the axis of orientation, vertical or horizontal, of the tool holder, the rigidity of the machine, the operating tool can have a vibration frequency that is likely to vary. This variation in the vibrations during the operation of the tool can therefore be the cause of a problem with the effectiveness of the damping of said vibrations by the absorbent mass.

The aim of the present invention is in particular to overcome these disadvantages by proposing a damping device which is adapted to perform an effective damping of the vibrations of a tool over an extended vibrational range at the same time enabling a possible control of the suspension.

In accordance with an aspect of the present invention, a movable element for a damping system comprises an absorbent mass designed to be positioned in a housing and comprising at least two damping assemblies which are positioned respectively against the surface of the absorbent mass and designed to bear against the internal wall of the housing in different parts of the absorbent mass, wherein the movable element is arranged to function with a phase shift and/or shift of displacement amplitude between the oscillations of each part of the absorbent mass in each of the damping assemblies during the operation of the movable element, by generating damping effects and/or having different rigidity for each of the damping assemblies.

In accordance with another aspect of the present invention, a damping system comprises at least one movable element according to the invention.

In accordance with another aspect of the present invention, a method for implementing a movable element according to the invention in a damping system for a vibration damping operation, comprises at least one step of generating a phase shift and/or shift of displacement amplitude between each of the parts of the absorbent mass during the oscillating displacement of the absorbent mass relative to the housing.

### BRIEF DESCRIPTION OF THE DRAWINGS

The features and advantages of the present invention are well understood by reading the following detailed description in conjunction with the drawings in which like numerals indicate similar elements and in which:
- figure 1 is a comparative representation of the displacement of different parts of the absorbent mass in relation to the housing of a damping system,
- figure 2 is a schematic cross-sectional representation of a first embodiment of a movable element according to the invention integrated into a damping system,
- figure 3 is a schematic cross-sectional representation of a second embodiment of a movable element according to the invention integrated into a damping system,
- figure 4 is a schematic cross-sectional representation of a third embodiment of a movable element according to the invention integrated into a damping system,
- figure 5 is a schematic cross-sectional representation of a fourth embodiment of a movable element according to the invention integrated into a damping system,
- figure 6 is a schematic cross-sectional representation of a fifth embodiment of a movable element according to the invention integrated into a damping system,
- figure 7 is a schematic cross-sectional representation of a sixth embodiment of a movable element according to the invention integrated into a damping system.

### DETAILED DESCRIPTION

The invention relates to a movable element for a damping system 4 comprising an absorbent mass 1 designed to be positioned in a housing 2 and comprising at least two damping assemblies 3 positioned respectively against the surface of the absorbent mass 1 and designed to bear against the internal wall of the housing 2 of different parts of the absorbent mass 1, wherein the movable element is arranged to operate with a phase shift and/or shift of displacement amplitude between the oscillations of each part of the absorbent mass 1 in each of the damping assemblies 3 during the operation of the movable element, by generating damping effects and/or having different rigidity for each of the damping assemblies 3.

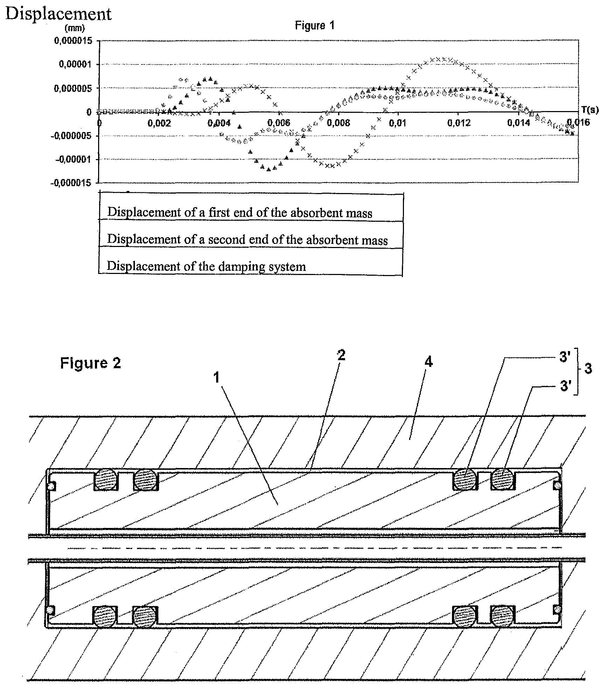

Figure 1 illustrates that the generation of phase shift effects and/or shifts of displacement amplitude between each of the damping assemblies 3 makes it possible to achieve damping over a greater range of vibration frequencies. In fact, in the representation of figure 1, the signals relating to respective ends of the absorbent mass 1 of a movable element illustrate respective radial displacements of each of the ends of the absorbent mass 1 over time, when the damping system which comprises said absorbent mass in its housing 2 is subjected to a radial shock. The third signal represents the radial displacement over time of the damping system 4 integrating the movable element of the invention, subjected to the same radial shock. It should be noted that this third signal shows a reduction of its amplitude relative to the radial oscillations of the two other signals, showing greater damping of the vibrations because of the damping effects and/or different hardnesses of each of the damping assemblies 3 of the device.

Said phase shift effect and/or shift of displacement amplitude can be achieved, on the one hand by influencing the specific damping properties and/or rigidity of each of the damping assemblies 3, and on the other hand by modifying the characteristics of the absorbent mass 1 of the movable element. It should be noted that these methods of technical intervention for modifying a phase shift effect and/or shift of displacement amplitude are not incompatible.

The movable element may have damping assemblies 3 positioned in each part of the absorbent mass 1 and they have different damping properties and/or rigidity.

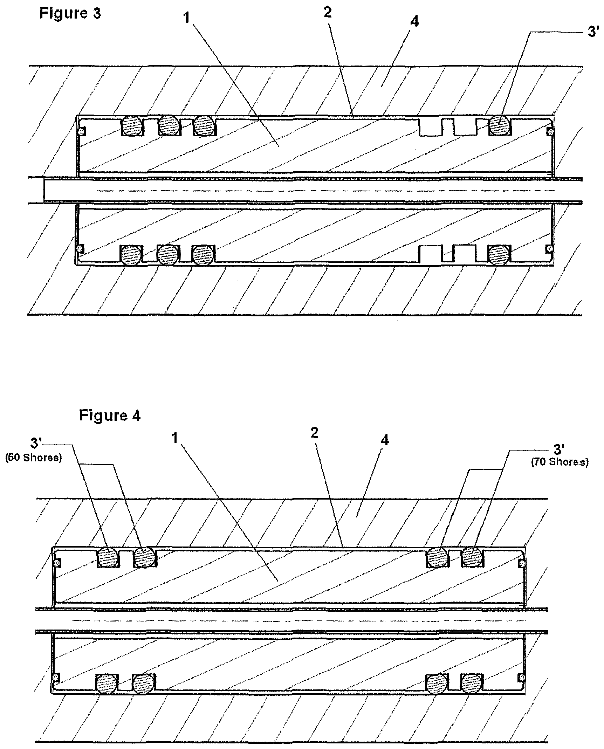

It is possible to achieve different damping properties and/or rigidity by means of damping assemblies 3 formed respectively by a different number of one or more elastic elements 3', said elements being designed to be held clamped in position between the absorbent mass 1 and the internal wall of the housing 2. This difference in the number of elastic elements 3', as illustrated by way of the example in figure 3, makes it possible to obtain an imbalance between the respective damping abilities and/or rigidity of the damping assemblies 3.

According to one embodiment, the damping assemblies 3 are formed by elastic elements 3' positioned in annular grooves arranged at least radially on the periphery of the absorbent mass 1.

According to a first possibility of adjusting the phase shift effect and/or shift of displacement amplitude in connection with this embodiment, the respective number of elastic elements 3' of each of the damping assemblies 3 is different. Said difference thus generates damping and/or a different rigidity in each of the damping assemblies 3 of the movable element. A non-limiting example of the structure of this embodiment is illustrated in figure 3.

According to a second option for adjusting the phase shift effect and/or shift of displacement amplitude in connection with this embodiment, the respective elastic elements 3' of the damping assemblies 3 have different hardness values. Said difference in hardness between each of the damping assemblies 3 makes it possible to obtain a different deformation of each of the respective elastic elements 3' of the damping assemblies 3. In case of an identical shock, an elastic element 3' with greater hardness will be deformed with more difficulty and will ensure damping and a smaller displacement. A non-limiting example of the structure of this embodiment is illustrated in figure 4.

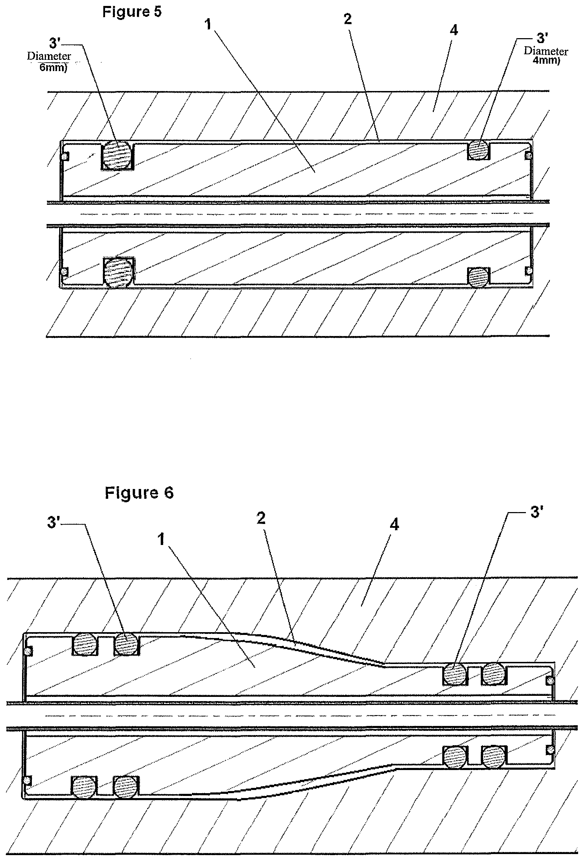

According to a third option for adjusting the phase shift effect and/or shift of displacement amplitude in connection with this same embodiment, the respective elastic elements 3' of the damping assemblies 3 have sections with different diameters. This difference in cross section also makes it possible to influence the incidence of damping and/or rigidity. In case of an identical shock, an elastic element 3' with a cross section with a larger diameter ensures greater damping and displacement. A non-limiting example of the structure of said second possible embodiment is illustrated in figure 5.

Within the absorbent mass 1 in the movable element there may be a variation in the distribution of mass in the respective damping assemblies 3. It should be noted that this feature is perfectly compatible with the feature of the embodiment described in detail above.

It is possible to achieve a different mass distribution between the damping assemblies 3 in different ways.

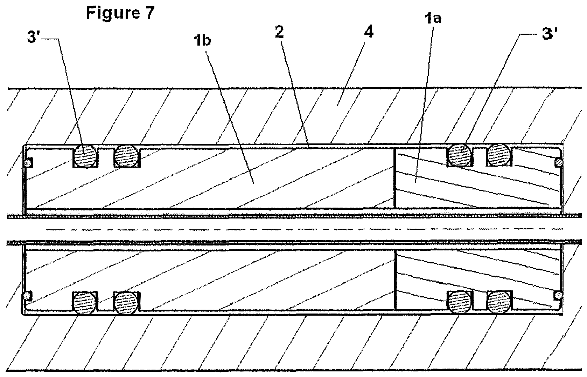

According to a first embodiment, within the absorbent mass 1 there is a variation in the distribution of mass by having a different density in each of the respective parts of the absorbent mass 1 in contact with a damping assembly 3. According to a non-limiting example of the structure of this embodiment as illustrated in figure 7, the absorbent mass 1 is formed by at least two elements 1a, 1b with different densities and designed to interact with a respective damping assembly 3.

According to a second embodiment, within the absorbent mass 1 there is a variation in the distribution of mass by having different volumes in each of the respective parts of the absorbent mass 1 in contact with a damping assembly 3. According to a non-limiting example of the structure of this embodiment as illustrated in figure 6, the absorbent mass 1 has a variation in cross section in the portion located between the respective parts of the absorbent mass 1 in contact with a damping assembly 3.

It should be noted that the different possible structures mentioned by way of example are embodiments that are compatible with one other in the form of the embodiment of a movable element according to the invention. It should also be noted that although only two damping assemblies 3 have been shown in the different embodiments, it is also possible to have a structure of the movable element involving more than two damping assemblies 3.

The invention also relates to a damping system 4 which comprises at least one movable element according to the invention. Said damping system 4 comprises a housing 2 into which the movable element of the invention is inserted. The damping system can be connected to a cutting or drilling apparatus or a cutting or drilling tool, usually for adapted metal cutting.

The invention also relates to a method for implementing a movable element according to the invention in a damping system 4 in the form of a vibration damping operation. The method comprises at least one step of generating a phase shift and/or shift of displacement amplitude between each of the parts of the absorbent mass 1 during the oscillating displacement of the absorbent mass 1 relative to the housing 2.

The disclosures in French patent application No. 1362154, from which this application claims priority, are incorporated herein by reference.

## Claims

1. A movable element for a damping system (4) comprising an absorbent mass (1) designed to be positioned in a housing (2) and comprising at least two damping assembles (3) positioned respectively against the surface of the absorbent mass (1) and designed to bear against the internal wall of the housing (2) in different parts of the absorbent mass (1), **characterised in that** the movable element is arranged to function with a phase shift between the oscillations of each part of the absorbent mass (1) in each of the damping assemblies (3) during the operation of the movable element, by generating damping effects and/or having different rigidity for each of the damping assemblies (3).

2. The movable element according to claim 1, wherein the movable element is arranged to function with a shift of displacement amplitude between the oscillations of each part of the absorbent mass (1) in each of the damping assemblies (3) during the operation of the movable element, by generating damping effects and/or having different rigidity for each of the damping assemblies (3).

3. The movable element according to claim 1 or 2, wherein the damping assemblies (3) positioned respectively in each part of the absorbent mass (1) have different damping properties and/or rigidity.

4. The movable element according to any of claims 1 to 3, wherein the damping assemblies (3) are formed respectively by a different number of one or more elastic elements (3') designed to be held clamped in position between the absorbent mass (1) and internal wall of the housing (2).

5. The movable element according to at least claim 4, wherein the damping assemblies (3) are formed by elastic elements positioned in annular grooves arranged at least radially on the periphery of the absorbent mass (1).

6. The movable element according to any of claims 1 to 5, wherein the respective elastic elements of the damping assemblies (3) have different hardness values.

7. The movable element according to any of claims 1 to 6, wherein the respective elastic elements (3) of the damping assemblies (3) have sections with different diameters.

8. The movable element according to any of claims 1 to 4, wherein the absorbent mass (1) has a different distribution of mass in the respective damping assemblies (3).

9. The movable element according to claim 8, wherein within the absorbent mass (1) there is a variation in the distribution of mass by having a different density in each of the respective parts of the absorbent mass (1) in contact with a damping assembly (3).

10. The movable element according to claim 8, wherein within the absorbent mass (1) there is a variation in the distribution of mass by having different volumes in each of the respective parts of the absorbent mass (1) in contact with a damping assembly (3).

11. A damping system (4), **characterised in that** it comprises at least one movable element according to any of claims 1 to 10.

12. The damping system (4), according to claim 11, wherein it is connected to a cutting or drilling apparatus or a cutting or drilling tool.

13. A method for implementing a movable element according to any of claims 1 to 10 in a damping system (4) for a vibration damping operation, **characterised in that** the method comprises at least one step of generating a phase shift and/or shift of displacement amplitude between each part of the absorbent mass (1) during the oscillating displacement of the absorbent mass (1) relative to the housing (2).

## Patentansprüche

1. Bewegbares Element für ein Dämpfungssystem (4), welches eine Absorptionsmasse (1) aufweist, die dafür ausgelegt ist, in einem Gehäuse (2) angeordnet zu werden und die zumindest zwei Dämpfungseinrichtungen (3) aufweist, welche jeweils an der Oberfläche der Absorptionsmasse (1) angeordnet und dafür ausgelegt sind, dass sie an der Innenwand des Gehäuses (2) an unterschiedlichen Stellen der Absorptionsmasse (1) anliegen, **dadurch gekennzeichnet, dass** das bewegbare Element so angeordnet ist, dass es während seines Betriebs in jeder der Dämpfungseinrichtungen (3) mit einer Phasenverschiebung zwischen den Oszillationen jedes der Teile der Absorptionsmasse (1) arbeitet, indem Dämpfungseffekte erzeugt werden und/oder indem es unterschiedliche Steifigkeiten für jede der Dämpfungseinrichtungen (3) aufweist.

2. Bewegbares Element nach Anspruch 1, wobei das bewegbare Element so angeordnet ist, dass es während des Betriebs des bewegbaren Elementes mit einer Verschiebung der Versetzungsamplitude zwischen den Oszillationen jedes Teiles der Absorptionsmasse in jeder der Dämpfungseinrichtungen (3) arbeitet, indem Dämpfungseffekte erzeugt werden und/oder unterschiedliche Steifigkeiten jeder der Dämpfungseinrichtungen (3) vorliegen.

3. Bewegbares Element nach Anspruch 1 oder 2, wobei die Dämpfungseinrichtungen (3), die jeweils in jedem Teil der Absorptionsmasse (1) angeordnet sind, unterschiedliche Dämpfungseigenschaften und/oder Steifigkeiten haben.

4. Bewegbares Element nach einem der Ansprüche 1 bis 3, wobei die Dämpfungseinrichtungen (3) jeweils durch eine unterschiedliche Anzahl eines oder mehrerer elastischer Elemente (3') gebildet werden, die dafür ausgelegt sind, an ihrer Position zwischen der Absorptionsmasse (1) und der Innenwand des Gehäuses (2) festgeklemmt zu werden.

5. Bewegbares Element zumindest nach Anspruch 4, wobei die Dämpfungseinrichtungen (3) durch elastische Elemente gebildet werden, die in ringförmigen Nuten angeordnet sind, welche zumindest radial an dem Umfang der Absorptionsmasse (1) angeordnet sind.

6. Bewegbares Element nach einem der Ansprüche 1 bis 5, wobei die entsprechenden elastischen Elemente der Dämpfungseinrichtungen unterschiedliche Härtewerte haben.

7. Bewegbares Element nach einem der Ansprüche 1 bis 6, wobei die jeweiligen elastischen Elemente (3) der Dämpfungseinrichtungen (3) Abschnitte mit unterschiedlichen Durchmessern haben.

8. Bewegbares Element nach einem der Ansprüche 1 bis 4, wobei die Absorptionsmasse (1) eine unterschiedliche Massenverteilung in den jeweiligen Dämpfungseinrichtungen (3) hat.

9. Bewegbares Element nach Anspruch 8, wobei innerhalb der Absorptionsmasse (1) eine Variation in der Verteilung der Masse vorgesehen ist, indem sie in jedem der entsprechenden Teile der Absorptionsmasse (1), die in Kontakt mit einer Dämpfungseinrichtung (3) sind, unterschiedliche Dichten haben.

10. Bewegbares Element nach Anspruch 8, wobei innerhalb der Absorptionsmasse (1) eine Variation in der Verteilung der Masse vorliegt, indem in jedem der entsprechenden Teile der Absorptionsmasse (1) unterschiedliche Volumina in Kontakt mit einer Dämpfungseinrichtung (3) sind.

11. Dämpfungssystem (4), **dadurch gekennzeichnet, dass** es zumindest ein bewegbares Element nach einem der Ansprüche 1 bis 10 aufweist.

12. Dämpfungssystem (4) nach Anspruch 11, wobei es mit einer Schneid- oder Bohrvorrichtung oder einem Schneid- oder Bohrwerkzeug verbunden ist.

13. Verfahren zum Verwenden eines bewegbaren Elementes nach einem der Ansprüche 1 bis 10 in einem Dämpfungssystem (4) für einen Vorgang der Vibrationsdämpfung, **dadurch gekennzeichnet, dass** das Verfahren während der Hin- und Herbewegung der Absorptionsmasse (1) relativ zu dem Gehäuse (2) zumindest einen Schritt zum Erzeugen einer Phasenverschiebung und/oder der Verschiebung einer Auslenkungsamplitude zwischen allen Teilen der Absorptionsmasse (1) hat.

## Revendications

1. Elément mobile pour un système d'amortissement (4) comprenant une masse absorbante (1) conçue pour être positionnée dans un logement (2) et comprenant au moins deux ensembles d'amortissement (3) positionnés respectivement contre la surface de la masse absorbante (1) et conçus pour reposer contre la paroi interne du logement (2) dans différentes parties de la masse absorbante (1), **caractérisé en ce que** l'élément mobile est agencé pour fonctionner avec un décalage de phase entre les oscillations de chaque partie de la masse absorbante (1) dans chacun des ensembles d'amortissement (3) pendant le fonctionnement de l'élément mobile, en générant des effets d'amortissement et/ou en ayant une rigidité différente pour chacun des ensembles d'amortissement (3).

2. Elément mobile selon la revendication 1, où l'élément mobile est agencé pour fonctionner avec un décalage d'amplitude de déplacement entre les oscillations de chaque partie de la masse absorbante (1) dans chacun des ensembles d'amortissement (3) pendant le fonctionnement de l'élément mobile, en générant des effets d'amortissement et/ou en ayant une rigidité différente pour chacun des ensembles d'amortissement (3).

3. Elément mobile selon la revendication 1 ou 2, où les ensembles d'amortissement (3) positionnés respectivement dans chaque partie de la masse absorbante (1) présentent des propriétés d'amortissement différentes et/ou une rigidité différente.

4. Elément mobile selon l'une quelconque des revendications 1 à 3, où les ensembles d'amortissement (3) sont formés respectivement par un nombre différent d'éléments élastiques (3'), allant de un à plusieurs, conçus pour être maintenus fixés en position entre la masse absorbante (1) et la paroi interne du logement (2).

5. Elément mobile selon au moins la revendication 4, où les ensembles d'amortissement (3) sont formés par des éléments élastiques positionnés dans des rainures annulaires agencées au moins radialement sur la périphérie de la masse absorbante (1).

6. Elément mobile selon l'une quelconque des revendications 1 à 5, où les éléments élastiques respectifs des ensembles d'amortissement (3) présentent des valeurs de dureté différentes.

7. Elément mobile selon l'une quelconque des revendications 1 à 6, où les éléments élastiques respectifs (3') des ensembles d'amortissement (3) présentent des sections de diamètres différents.

8. Elément mobile selon l'une quelconque des revendications 1 à 4, où la masse absorbante (1) présente une répartition de masse différente dans les ensembles d'amortissement respectifs (3).

9. Elément mobile selon la revendication 8, où dans la masse absorbante (1), il existe une variation de la répartition de masse qui découle du fait d'avoir une densité différente dans chacune des parties respectives de la masse absorbante (1) en contact avec un ensemble d'amortissement (3).

10. Elément mobile selon la revendication 8, où dans la masse absorbante (1), il existe une variation de la répartition de masse qui découle du fait d'avoir des volumes différents dans chacune des parties respectives de la masse absorbante (1) en contact avec un ensemble d'amortissement (3).

11. Système d'amortissement (4), **caractérisé en ce qu'**il comprend au moins un élément mobile selon l'une quelconque des revendications 1 à 10.

12. Système d'amortissement (4) selon la revendication 11, où il est relié à un appareil de coupe ou de perçage ou à un outil de coupe ou de perçage.

13. Procédé permettant de mettre en oeuvre un élément mobile selon l'une quelconque des revendications 1 à 10 dans un système d'amortissement (4) pour une opération d'amortissement de vibrations, **caractérisé en ce que** le procédé comprend au moins une étape consistant à générer un décalage de phase et/ou un décalage d'amplitude de déplacement entre chaque partie de la masse absorbante (1) pendant le déplacement oscillant de la masse absorbante (1) par rapport au logement (2).
